# EUROPÄISCHE PATENTSCHRIFT

(11) **EP 0 694 487 B1**
(45) Veröffentlichungstag und Bekanntmachung des Hinweises auf die Patenterteilung: **01.04.1998**
(21) Anmeldenummer: 95111682.1
(22) Anmeldetag: 25.07.1995
(51) Int. Cl.: B65G 47/61, B65G 33/02, B65G 33/04

(54) **Übernahmevorrichtung**
Transfert device
Dispositif de transfert

(30) Priorität: 29.07.1994 DE 4427027
(43) Veröffentlichungstag der Anmeldung: 31.01.1996
(73) Patentinhaber: Gärtner, Franz, D-97656 Oberelsbach (DE)
(72) Erfinder: Gärtner, Franz, D-97656 Oberelsbach (DE)
(74) Vertreter: Patentanwälte Dr. Solf & Zapf

(56) Entgegenhaltungen:
- EP-A- 0 005 539
- US-A- 3 982 623

## Beschreibung

Die Erfindung betrifft eine Übernahmevorrichtung für mit einer Hängevorrichtung transportiertes, an Haken hängendem Gut nach dem Oberbegriff des Anspruchs 1.

Eine derartige Vorrichtung ist aus der DE 39 34 995 C1 bekannt. Die darin offenbarte Übernahmevorrichtung ist für ein an Haken hängendes Gut ausgebildet, wobei die Haken eine Tragstange eines an einer Schiene eingehängten Trolley übergreifen. Diese Übernahmevorrichtung hat eine Abwurfstange mit abfallendem Verlauf, die an ihrem oberen Ende einen nach unten gebogenen Endbereich zur Übernahme des Gutes von einer Tragstange eines Trolleys hat. Dieser Endbereich der Abwurfstange ist in einer Gut-Übernahmestellung an die Tragstange des jeweils in der Übergabeposition befindlichen Trolley anstellbar, wobei die an der Tragstange hängenden Haken untergriffen werden. Dieser Endbereich ist in der Art einer Rampe ansteigend an der Tragstange angeordnet, so daß die Haken von der Tragstange gehoben werden. Zum Anheben der Haken ist eine Förderschnecke vorgesehen, die parallel zum Endbereich der Tragstange verläuft, so daß die auf dem Endbereich der Tragstange eingehängten Haken von dem Schneckengewinde ergriffen werden und nach oben bis zum abfallenden Verlauf der Abwurfstange transportiert werden, so daß die Haken und das daran hängende Gut durch ihr Gewicht weitergleiten. Der Endbereich der Tragstange ist von der Tragstange wegschwenkbar ausgebildet, wobei bei dem Schwenkvorgang auch ein die Förderschnecke antreibender Elektromotor mitgeschwenkt werden muß, wodurch bei jedem Schwenkvorgang eine große Masse bewegt wird. Ferner weist diese Übernahmevorrichtung einen Mechanismus zum Anhalten bzw. langsamen Fortbewegen der Trolleys auf, so daß die Haken von dem Endbereich der Abwurfstange einzeln aufgegriffen werden können.

Vorteilhaft an dieser Vorrichtung ist, daß die Haken durch die Schwenkbewegung der Abwurfstange und dem Anstellen der Abwurfstange an die Tragstange vereinzelt werden können. Jedoch ist es nachteilig, daß beim Ergreifen bzw. Aufnehmen der Haken auf den nach oben rampenartig ansteigenden Endbereich der Abwurfstange die Haken zwischen dem Endbereich und der Schnecke eingequetscht werden, wobei das Ergreifen der Haken nicht immer sofort erfolgt, so daß sich der Vorgang des Vereinzelns verzögert und keine Haken beliebiger Stärke, insbesondere Haken aus dünnem Draht und Kunststoffhaken mit hoher Materialstärke, mit demselben Schneckentyp weiterbefördert werden können. Zudem beschränkt die relativ große Masse, die beim Verschwenkvorgang bewegt werden muß, die Vereinzelungsfrequenz.

In der US-3,982,623 ist eine weitere Übernahmevorrichtung für an Haken hängendem Gut beschrieben, bei der die Haken mit einer Gewindestange, die durch einen Motor angetrieben wird, befördert werden. Auch bei dieser Übernahmevorrichtung ist eine abfallende Abwurfstange vorgesehen, die sich etwas oberhalb der Gewindestange in einem Bogen erstreckt, so daß ein mit der Abwurfstange gelenkig verbundener Finger an die Gewindestange, die die Haken befördert, angesetzt werden kann und von dieser etwas weggeschwenkt werden kann. Ist der Finger an die Gewindestange angesetzt, so werden die durch die Gewindestangen beförderten Haken von dem Finger untergriffen, wobei an die Gewindestange eine Schraubenfeder mit derselben Ganghöhe wie die des Gewindes der Gewindestange angebracht ist, die sich um die Gewindestange und um den schwenkbaren Finger erstreckt, so daß die auf dem Finger befindlichen Haken durch die Schraubenfeder den rampenartig ansteigenden Finger hinaufbefördert werden, von wo sie auf der abfallenden Abwurfstange weitergleiten.

Diese Übernahmevorrichtung hat den Vorteil, daß ihr Aufbau relativ einfach ist und zum Vereinzeln nur ein kleiner Finger hin- und herbewegt werden muß. Jedoch ist eine solche Übernahmevorrichtung nur für Hängefördervorrichtungen, bei denen die Haken auf einer von einem Motor angetriebenen Gewindestange befördert werden, aber nicht für Hängefördervorrichtungen, bei denen die Haken auf einer sich nicht drehenden Stange hängen, wie es beispielsweise bei Hängefördervorrichtungen mit Trolleys der Fall ist, die längs einer Schiene bewegt werden und eine Tragstange haben, auf der die Haken hängen, geeignet.

Aufgabe der Erfindung ist es, eine Übernahmevorrichtung nach dem Oberbegriff des Anspruchs 1 so auszubilden, daß ein problemloses und schnelles Vereinzeln beliebiger Haken möglich ist, die eine sich nicht drehende Tragstange übergreifen.

Die Aufgabe wird durch die Merkmale des Anspruchs 1 gelöst.

Durch das Ausbilden des Endbereichs der Tragstange als drehbare Schnecke werden die Haken unmittelbar durch die sich drehende freiliegende Schnecke ergriffen, so daß beliebige Haken vereinzelt werden können. Das Vereinzeln ist völlig unproblematisch, da die Haken nicht zwischen einer Führung und einer Schnecke eingeklemmt werden müssen, wie es beim gattungsbildenden Stand der Technik nach der DE 39 34 995 C1 der Fall ist.

Beim Ansetzen des Endbereichs der Abwurfstange wird nur eine geringe Masse bewegt, weshalb der Schwenkvorgang sehr schnell ausgeführt werden kann und eine hohe Vereinzelungsfrequenz erreicht wird.

Vorzugsweise ist die Übernahmevorrichtung mit einer Schraubenfeder gemäß Anspruch 3 ausgebildet, so daß die Haken, nachdem sie von der Schnecke aufgenommen worden sind, durch die Schraubenfeder auf der Abwurfstange weiterbefördert werden.

Die Verwendung der erfindungsgemäßen Übernahmevorrichtung für eine Hängefördervorrichtung mit Trolleys, bei der die Haken auf einer Tragstange hängen, hat den Vorteil, daß durch die sich drehende Schnecke die auf der Tragstange hängenden Haken in Bewegung gesetzt werden, ohne daß die Tragstange des Trolleys dazu schräg gestellt werden muß, damit die Haken auf die Abwurfstange rutschen. Die Tragstange muß somit nicht zum Vereinzeln der Haken betätigt werden und kann sogar mit einem anti-Rutschbelag belegt sein, der ein Verrutschen der Haken auf der Tragstange während der Bewegung der Trolleys verhindert.

Vorteilhafte Ausgestaltungen der Erfindung gehen aus den Unteransprüchen und der Beschreibung hervor.

Anhand der Zeichnungen wird die Erfindung beispielhaft näher beschrieben. Es zeigen:
- Fig. 1: eine erfindungsgemäße Übernahmevorrichtung, die an eine Tragstange eines Trolleys angesetzt ist; und
- Fig. 2: eine Abwurfstange im Querschnitt, insbesondere mit deren Endbereich.

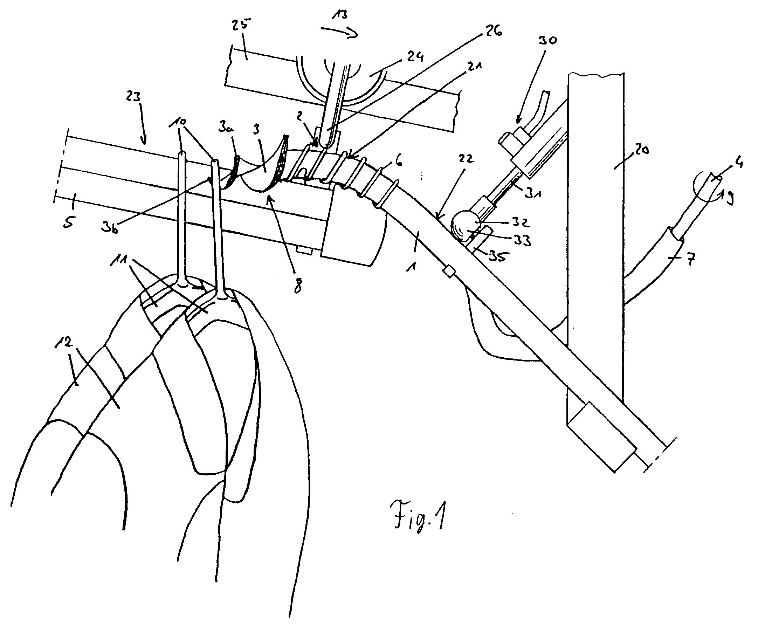

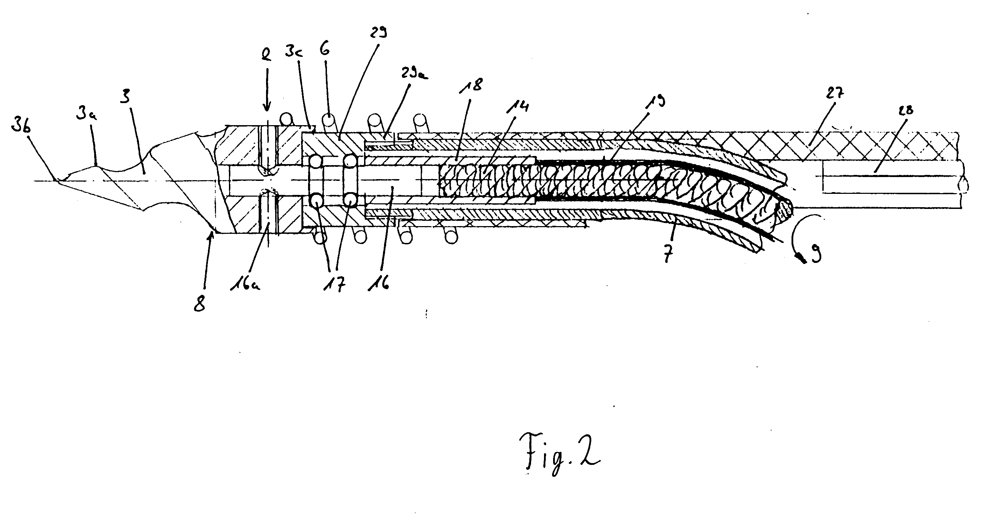

Die erfindungsgemäße Übernahmevorrichtung ist für Hängefördervorrichtungen vorgesehen, die an Haken hängendes Gut transportieren, insbesondere von auf Kleiderbügeln 11 hängenden Bekleidungsstücken 12 (Fig. 1). Die Haken 10 übergreifen hierbei eine Tragstange 5, von der sie auf eine Abwurfstange 1 mit abfallendem Verlauf übernommen werden.

Die Abwurfstange 1 ist mit ihrem Endbereich 2 in der Nähe einer sich in der Übernahmestellung befindlichen Tragstange 5 angeordnet, wobei der Endbereich 2 einen in der Art einer Rampe ansteigenden Bereich bildet, der mit einem Bogen 21 in den abfallenden Bereich 22 der Abwurfstange 1 übergeht. Am freien Ende 8 des Endbereichs 2, das an eine in der Übernahmestellung befindliche Tragstange 5 angestellt werden kann, ist eine Schnecke 3 vorgesehen, die durch im Inneren der Abwurfstange 1 befindliche Antriebsmittel gedreht wird. Die Schnecke 3, die vorzugsweise spitz zuläuft, kann so einen auf der Tragstange 5 befindlichen Haken 10 untergreifen und mit ihrem Gewinde 3a aufnehmen, so daß der Haken 10 von der Tragstange 5 auf die Abwurfstange 1 gezogen wird.

Vorzugsweise schließt sich an die Schnecke 3 eine Schraubenfeder 6 an, die den Endbereich 2 der Abwurfstange 1 umgibt und sich bis über den Bogen 21 erstreckt. Die Schraubenfeder 6 ist drehfest mit der Schnecke 3 verbunden und ihr Drehsinn entspricht dem Drehsinn des Schneckengewindes 3a, so daß ein durch die Schnecke 3 ergriffener Haken 10 durch die Drehbewegung der Schnecke 3 und der Schraubenfeder 6 von der Spitze 3b der Schnecke 3 den Endbereich 2 bis über den Bogen 21 zum abfallenden Bereich 22 der Abwurfstange 1 befördert wird, an dem der Haken 10 und das daran hängende Gut durch ihr Gewicht hinabgleiten.

Die Abwurfstange 1 ist aus einem elastischen schlauchförmigen Material 27 ausgebildet, das im Inneren mit einem Kern 28 versehen ist. Sie wird mit mehreren bandförmigen Trägern 20 (Fig. 1 zeigt nur einen bandförmigen Träger 20) im Raum positioniert, wobei auch aufgrund der Elastizität des schlauchförmigen Materials Biegungen und Kurven möglich sind. Das Ansetzen der Schnecke 3 an eine Tragstange 5 wird mit einer Kolben-Zylinderanordnung 30 ausgeführt, die am abfallenden Bereich 22 ein wenig unterhalb des Bogens 21 mit der Abwurfstange 1 verbunden ist. Die Zylinder-Kolbenanordnung 30 ist vorzugsweise pneumatisch angetrieben und quer zur Abwurfstange 1 angeordnet. Eine Kolbenstange 31 der Anordnung 30 ist über ein Kugelgelenk 32 an die Abwurfstange 1 angeschlossen. Das Kugelgelenk 32 besteht aus einem hohlkugelförmigen Kalottenteil 33, das fest mit der Kolbenstange 31 verbunden ist, und aus einer in dem Kalottenteil 33 formschlüssig angeordneten Kugel, die fest mit einem Schaft 34 verbunden ist, der seinerseits fest mit einem plattenförmigen Flansch 35 verbunden ist, der seitlich von der Abwurfstange 1 absteht, in einer Radialebene derselben liegt und fest mit ihr verbunden ist. Beim Ein- und Ausziehen der Kolbenstange 31 bei Betätigung der Kolben-Zylinderanordnung 30 wird die lineare hin- und hergehende Bewegung der Kolbenstange 31 über das Kugelgelenk 32 und den Flansch 33 in eine Drehbewegung der Kolbenstange bzw. deren oberen Bereich um ihre Mittellängsachse umgewandelt.

Mit der Kolben-Zylinderanordnung 30 wird die Abwurfstange 1 zwischen zwei Endstellungen drehverstellt, wobei in der einen Endstellung die Schnecke 3 an einer Tragstange 5 anliegt, um so einen darauf befindlichen Kleiderbügel übernehmen zu können, und in der anderen Endstellung die Schnecke 3 von der Tragstange 5 beabstandet ist, so daß ein Trolley 23 mit seiner Tragstange 5 an der Schnecke 3 bzw. der Übernahmevorrichtung vorbeigefahren werden kann.

Als im Endbereich 2 der Abwurfstange 1 angeordnete Antriebsmittel für die Schnecke 3 wird vorzugsweise eine biegsame Welle 4 vorgesehen, die von einem Rohr 7 an einer Stelle etwas entfernt von dem Endbereich 2 der Abwurfstange 1 aus dieser herausgeführt wird. Das Rohr 7 leitet die biegsame Welle zu einem Antriebsmotor (nicht dargestellt), der die Welle in Drehung versetzt. Bei der in Fig. 1 dargestellten Anordnung, wo die Schnecke 3 mit einem Linksgewinde versehen ist und in der Bewegungsrichtung der Trolleys (Pfeil 13) rechts neben der Tragstange 5 angeordnet ist, streicht durch eine Bewegung im Gegenuhrzeigersinn (Pfeil 9) die Spitze der Schnecke an der seitlichen Profilwandung der Tragstange 5 hoch und kann so einen Haken 10 aufnehmen.

Die biegsame Welle 4 besteht aus einem aufgewickelten Stahlseilzug 14, der von einem elastischen Mantel 19 umgeben ist. Das Rohr 7, in dem die biegsame Welle 4 geführt ist, ist vorzugsweise ein Metallrohr, das mit herkömmlichen Biegewerkzeugen von der Stelle, wo es in die Abwurfstange 1 eindringt, bis zum Antriebsmotor verlaufend gebogen werden kann. Die Schnecke 3 sitzt auf einem starren Wellenstück 16, das mit zwei Lagern 17 in einem kurzen Rohrstück 29 der Abwurfstange 1 drehbar aufgenommen ist. Die Schnecke 3 ist mit einem Stift 16a auf dem Wellenstück 16 fixiert, wobei die Schnecke 3 mit einem kurzen nach hinten stehenden Ansatz 3c das Rohrstück 29 umgreift. Als Lager 17 können übliche Kugel- oder Wälzlager oder dergleichen verwendet werden. An das Rohrstück 29 bzw. an ein dünnwandiges Rohransatzstück 29a schließt sich das schlauchförmige Material 27 an. Innerhalb dieses rohrförmigen Ansatzstückes 29a und des sich daran anschließenden schlauchförmigen Materials 27 ist das starre Wellenstück 16 mit einer Manschette 18 drehfest mit der biegsamen Welle 4 verbunden, so daß die Drehbewegung der Welle 4 auf das starre Wellenstück 16 und die Schnecke 3 übertragen wird.

Anstatt eine biegsame Welle vom Inneren der Abwurfstange 1 herauszuführen, kann die Schnecke 3 auch durch einen Luftmotor angetrieben werden, der auf dem Wellenstück 16 sitzt und durch in einem Schlauch zugeführte Druckluft angetrieben wird. Ein solcher Schlauch zur Zuführung von Druckluft hat etwa denselben Verlauf wie die hier dargestellte biegsame Welle 4. Ein Luftmotor ist vorzugsweise anzuwenden, wenn der Abstand zwischen dem Aggregat, das die Energie für den Antrieb der Schnecke 3 aufbringt, dem Kompressor bzw. dem Motor, von dem Einsatzort der Schnecke 3 weit entfernt ist, da sich die Druckluft ohne weiteres über größere Strecken übertragen läßt.

Das Rohrstück 29 bildet mit der Schnecke 3 und der Schraubenfeder 6 eine Einheit, die auf die Abwurfstange 1 bzw. deren schlauchförmiges Material 27 und auf das Rohr 7 aufsteckbar ist. Eine dauerhafte Verbindung zwischen dieser Einheit und der Abwurfstange 1 mit dem schlauchförmigen Material 27 und der biegsamen Welle 4 wird durch die Manschette 18 sichergestellt, die das starre Wellenstück 16 als auch die biegsame Welle drehfest umgreift.

Das Rohrstück 29 hat vorzugsweise die gleiche Querschnittsform wie die Abwurfstange 1. Die Schnecke 3 ist spitz zulaufend ausgebildet, wobei ihr Querschnitt von der Spitze 3b allmählich bis zum Rohrstück 29 zunimmt, so daß die Gewindenut des Schneckengewindes 3a an den Außenumfang des Rohrstücks 29 mündet.

Ein Trolley 23, der mit einer Tragstange 5 versehen ist, wird auf einer Schiene 25 geführt, wobei der Trolley 23 sich gegenüber der Schiene 25 mit Laufrädern 24 abstützt. Von den Laufrädern 24 erstrecken sich nach unten Aufhängemittel 26 für die Tragstange 5. Diese Aufhängemittel sind vorzugsweise federnd ausgebildet, wie es beispielsweise in der WO 93/24398 beschrieben ist.

## Patentansprüche

1. Übernahmevorrichtung für mit einer Hängefördervorrichtung transportiertes, an Haken hängendem Gut, insbesondere von auf Kleiderbügeln hängenden Bekleidungsstücken, um die Haken (10), die eine Tragstange (5) übergreifen, von dieser zu übernehmen und auf eine Abwurfstange (1) mit abfallendem Verlauf zu befördern, wobei die Abwurfstange (1) einen an die Tragstange (5) anstellbaren Endbereich (2) hat, der mit seinem freien Ende (8) die Haken (10) untergreifen kann, und
eine Einrichtung zum Befördern der Haken entlang des Endbereichs (2) der Abwurfstange (1) vorgesehen ist,
**dadurch gekennzeichnet,**
daß das freie Ende (8) des Endbereichs (2) der Abwurfstange (1) als drehbare Schnecke (3) ausgebildet ist, die durch im Endbereich (2) angeordnete Antriebsmittel angetrieben wird, um einen die Tragstange (5) übergreifenden Haken (10) zu ergreifen.

2. Übernahmevorrichtung nach Anspruch 1,
**dadurch gekennzeichnet,**
daß die Schnecke (3) spitz zulaufend ausgebildet ist.

3. Übernahmevorrichtung nach Anspruch 1 oder 2,
**dadurch gekennzeichnet,**
daß eine Schraubenfeder (6) mit der Schnecke (3) drehfest verbunden ist und sich von der Schnecke (3) nach hinten auf den Endbereich (2) der Abwurfstange (1) erstreckt, wobei die Schraubenfeder (6) in demselben Drehsinn wie der Drehsinn des Schneckengewindes (3a) gewickelt ist.

4. Übernahmevorrichtung nach einem der Ansprüche 1 bis 3,
**dadurch gekennzeichnet,**
daß die Antriebsmittel eine biegsame Welle (4) umfassen, die an einer von dem Endbereich (2) der Abwurfstange (1) entfernten Stelle aus der Abwurfstange (1) herausgeführt wird und von einem Motor angetrieben wird.

5. Übernahmevorrichtung nach einem der Ansprüche 1 bis 4,
**dadurch gekennzeichnet,**
daß die Antriebsmittel einen im Endbereich (2) der Abwurfstange (1) angeordneten Luftmotor umfassen, der durch über einen Schlauch zugeführte Druckluft angetrieben wird.

6. Übernahmevorrichtung nach einem der Ansprüche 1 bis 5,
**dadurch gekennzeichnet,** daß die Schnecke (3) mit einem starren Wellenstück (16) verbunden ist, das in einem Rohrstück (29) mit zumindest einem Lager, wie z.B. einem Kugellager, drehbar gehalten ist.

7. Übernahmevorrichtung nach einem der Ansprüche 1 bis 6,
**dadurch gekennzeichnet,**
daß eine Schwenkeinrichtung zum Schwenken der Schnecke (3) zwischen zwei Endstellungen vorgesehen ist, wobei in der einen Endstellung die Schnecke (3) an einer in der Übernahmestellung befindlichen Tragstange (5) anliegt und in der anderen Endstellung die Schnecke (3) von dieser Tragstange (5) beabstandet ist.

8. Übernahmevorrichtung nach einem der Ansprüche 1 bis 7,
**dadurch gekennzeichnet,**
daß der Endbereich (2) der Abwurfstange (1) rampenartig ansteigt und mit einem Bogen (21) in den abfallenden Verlauf der Abwurfstange (1) übergeht.

9. Verwendung einer Übernahmevorrichtung nach einem der Ansprüche 1 bis 8 in einer Hängefördervorrichtung mit Trolleys, die auf einer Schiene geführt sind und jeweils eine Tragstange zum Aufnehmen von Haken umfassen.

## Claims

1. Transfer device for articles transported by a suspension conveying device and hanging on hooks, in particular of articles of clothing hanging on coathangers, in order to transfer the hooks (10), which engage over a carrying bar (5), from the latter and convey them onto a discharge bar (1) with a downward-sloping course, the discharge bar (1) having an end region (2) which can be set against the carrying bar (5) and with its free end (8) can engage under the hooks (10), and a means for conveying the hooks along the end region (2) of the discharge bar (1) being provided, characterized in that the free end (8) of the end region (2) of the discharge bar (1) is designed as a rotatable worm (3), which is driven by drive means arranged in the end region (2), in order to take up a hook (10) engaging over the carrying bar (5).

2. Transfer device according to Claim 1, characterized in that the worm (3) is of tapering design.

3. Transfer device according to Claim 1 or 2, characterized in that a helical screw (6) is connected to the worm (3) in such a way as to be fixed in terms of rotation and extends from the worm (3) rearwardly onto the end region (2) of the discharge bar (1), the helical screw (6) winding in the same direction of rotation as the direction of rotation of the worm thread (3a).

4. Transfer device according to one of Claims 1 to 3, characterized in that the drive means comprise a flexible shaft (4), which is led out of the discharge bar (1) at a location remote from the end region (2) of the discharge bar (1) and is driven by a motor.

5. Transfer device according to one of Claims 1 to 4, characterized in that the drive means comprise an air motor, which is arranged in the end region (2) of the discharge bar (1) and is driven by compressed air supplied via a hose.

6. Transfer device according to one of Claims 1 to 5, characterized in that the worm (3) is connected to a rigid shaft piece (16), which is rotatably held in a pipe piece (29) with at least one bearing, such as for example a ball bearing.

7. Transfer device according to one of Claims 1 to 6, characterized in that a pivoting means for pivoting the worm (3) between two end positions is provided, the worm (3) in one end position resting against a carrying bar (5) situated in the transfer position, and the worm (3) in the other end position being spaced from this carrying bar (5).

8. Transfer device according to one of Claims 1 to 7, characterized in that the end region (2) of the discharge bar (1) rises in the manner of a ramp and changes by way of a curve (21) to the downward-sloping course of the discharge bar (1).

9. Use of a transfer device according to one of Claims 1 to 8 in a suspension conveying device with trolleys which are guided on a rail and in each case comprise a carrying bar for receiving hooks.

## Revendications

1. Dispositif de transfert pour une marchandise suspendue à un crochet, transportée à l'aide d'un dispositif de transport à l'état suspendu, en particulier de vêtements suspendus à des cintres, pour transférer les crochets (10) qui viennent s'accrocher par-dessus une barre de support (5), à partir de cette dernière, et pour les transporter sur une barre de déchargement (1) présentant une allure qui retombe, dans lequel la barre de déchargement (1) possède une zone terminale (2) apte à venir se raccorder à la barre de support (5), qui peut venir s'insérer avec son extrémité libre (8) en dessous des crochets (10) et dans lequel on prévoit un mécanisme pour transporter les crochets le long de la zone terminale (2) de la barre de déchargement (1),
caractérisé en ce que l'extrémité libre (8) de la zone terminale (2) de la barre de déchargement (1) est réalisée sous forme d'une vis sans fin rotative (3) qui est entraînée via des moyens d'entraînement disposés dans la zone terminale (2) pour saisir un crochet (10) venant se disposer par-dessus la barre de support (5).

2. Dispositif de transfert selon la revendication 1, caractérisé en ce que la vis sans fin (3) est réalisée d'une manière se terminant en pointe.

3. Dispositif de transfert selon la revendication 1 ou 2, caractérisé en ce qu'un ressort cylindrique (6) est relié en anti-rotation à la vis sans fin (3) et s'étend à partir de la vis sans fin (3) vers l'arrière sur la zone terminale (2) de la barre de déchargement (1), le ressort cylindrique (6) étant enroulé dans le même sens de rotation que celui du filet de vis (3a).

4. Dispositif de transfert selon l'une quelconque des revendications 1 à 3, caractérisé en ce que les moyens d'entraînement comprennent un arbre flexible (4) qui fait saillie hors de la barre de déchargement (1) à un endroit éloigné de la zone terminale (2) de la barre de déchargement (1) et qui est entraîné par un moteur.

5. Dispositif de transfert selon l'une quelconque des revendications 1 à 4, caractérisé en ce que les moyens d'entraînement comprennent un moteur pneumatique disposé dans la zone terminale (2) de la barre de déchargement (1), qui est entraîné via de l'air comprimé alimenté à travers un tuyau flexible.

6. Dispositif de transfert selon l'une quelconque des revendications 1 à 5, caractérisé en ce que la vis sans fin (3) est reliée à une partie d'arbre rigide (16) qui est maintenue en rotation dans un élément tubulaire (29) à l'aide d'au moins un palier tel que par exemple un roulement à billes.

7. Dispositif de transfert selon l'une quelconque des revendications 1 à 6, caractérisé en ce qu'on prévoit un mécanisme de pivotement pour faire pivoter la vis sans fin (3) entre deux positions terminales, dans lequel, dans la première position terminale, la vis sans fin (3) vient se disposer contre une barre de support (5) se trouvant dans la position de transfert et, dans l'autre position terminale, la vis sans fin (3) est écartée de cette barre de support (5).

8. Dispositif de transfert selon l'une quelconque des revendications 1 à 7, caractérisé en ce que la zone terminale (2) de la barre de déchargement (1) s'élève à la manière d'une rampe et aboutit progressivement via une courbe (21) dans l'allure de la barre de déchargement (1) qui retombe.

9. Utilisation d'un dispositif de transfert selon l'une quelconque des revendications 1 à 8, dans un dispositif de transport à l'état suspendu muni de chariots de transport qui sont guidés sur un rail et qui enserrent respectivement une barre de support pour le soulèvement des crochets.
